# EUROPEAN PATENT APPLICATION

(11) **EP 0 984 650 A2**
(43) Date of publication of application: **08.03.2000**
(21) Application number: 99306684.4
(22) Date of filing: 23.08.1999
(51) Int. Cl.: H04Q 7/38

(54) **Handoffs in extended range concentric cell base station**

(30) Priority: 31.08.1998 US 143665
(71) Applicant: LUCENT TECHNOLOGIES INC., Murray Hill, New Jersey 07974-0636 (US)
(72) Inventor: Jiang, Frances, Whippany, New Jersey 07981 (US); Kamel, Raafat Edward, Westfield, New Jersey 07090 (US); Kuo, Wen-Yi, Parsippany, New Jersey 07054 (US)
(74) Representative: Buckley, Christopher Simon Thirsk

(57) **Abstract**

The present invention is a method for performing handoffs in wireless communications systems having extended range concentric cell base station, wherein the concentric cell base station has a micro cell and a macro cell that incorporates multiple timing protocols to extend the base station's access range. In one embodiment, the base station determines whether a handoff is to be performed using absolute path delay information, which will indicate the current and previous positions of a mobile-telephone. If the absolute path delay information indicates that the mobile-telephone is moving between the macro cell and the micro cell, or to a cell associated with another base station, the current base station will instruct the mobile-telephone to perform a handoff to the frequency band associated with the micro cell, macro cell or base station to which the mobile-telephone is traveling towards.

## Description

### FIELD OF THE INVENTION

The present invention relates generally to wireless communications systems and, in particular, to performing handoffs in extended range wireless communications systems.

### BACKGROUND OF THE INVENTION

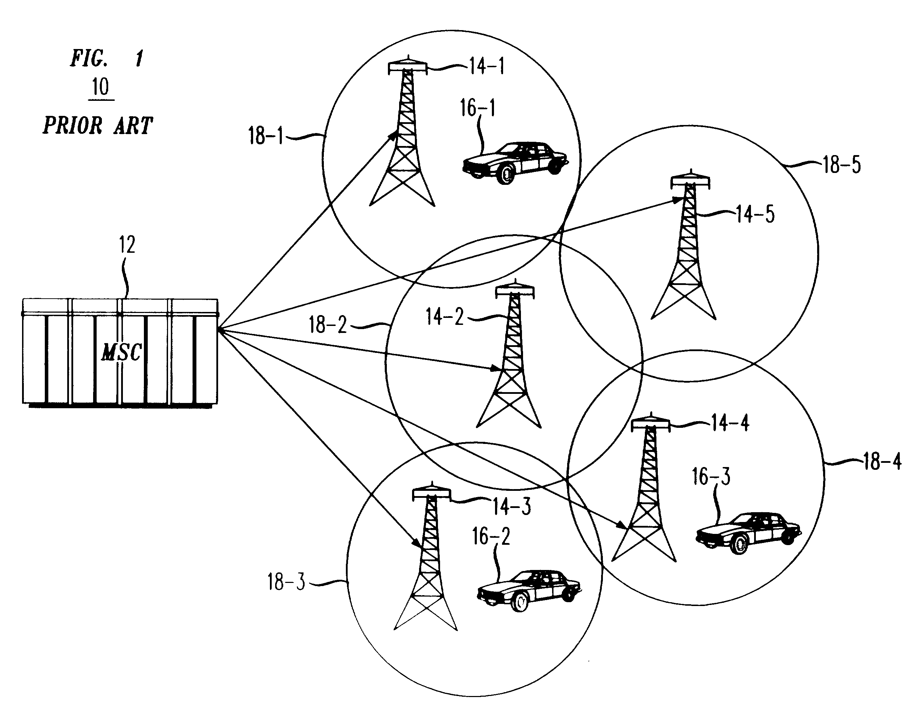

FIG. 1 depicts a wireless communications system 10 employing Code Division Multiple Access (CDMA) techniques based on the well-known IS-95 standard of the Telecommunication Industrial Association. The wireless communications system 10 comprises a mobile switching center (MSC) 12 and a plurality of base stations (BS) 14-*i* connected to the MSC 12. Each of BS 14-*i* provides wireless communications services to mobile-telephones (MT), such as mobile-telephones 16-*k*, within an associated geographical coverage area referred to herein as cell 18-*i* with a radius R_{*i*}. For illustrative purposes, cells 18-*i* are depicted as circular in shape with base stations 14-*i* centrally positioned. It should be understood that cells 18-*i* may also be non-circular in shape (e.g., hexagonal) with the base stations positioned non-centrally, and that the term "radius R_{*i*}" should be construed to define a distance between the base station and a point on the circumference of cell 18-*i* (which will vary depending on the particular point on the circumference).

Each base station 14-*i* includes radios and antennas for modulating and transmitting base station signals to mobile-telephones, and for receiving and demodulating mobile-telephone signals from mobile-telephones within its associated cell 18-*i*. Each base station 14-*i* further includes a receiver for receiving timing information using the well-known Global Positioning Satellites (hereinafter referred as a "GPS receiver").

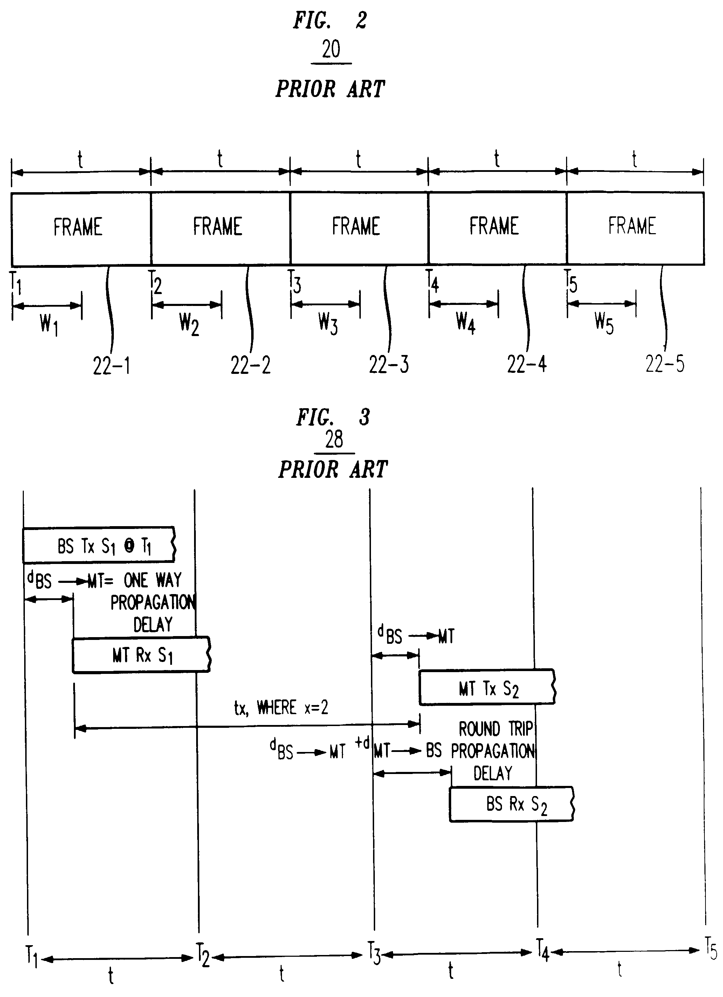

Signals are transmitted by base stations 14-*i* and mobile-telephones in accordance with a timing protocol aligned with GPS time using the GPS receiver. FIG. 2 depicts a timing schedule 20 incorporating an implementation of a timing protocol based on the IS-95 standard. The timing schedule 20 comprises a series of frames 22-*n*, wherein each frame 22-*n* spans a time interval *t*. The beginning of each frame 22-*n* is marked by a frame boundary at time T_{*n*} aligned to GPS time. In accordance with the timing protocol, base stations 14-*i* are configured to begin transmitting base station signals at the frame boundaries, wherein the base station signals include zero or more information bearing signals and a pilot signal for coherent demodulation of the information bearing signals by the mobile-telephones and system access operations. By contrast, mobile-telephones 16-*k* are configured to begin transmitting mobile-telephones signals at some multiple *x* of a frame time period (i.e., *tx*) after mobile-telephones 16-*k* began receiving base station signals, where *x* is some integer greater than or equal to zero. Unlike base station signals, mobile-telephone signals include one or more information bearing signals and no pilot signal, and are encoded using a set of orthogonal codes (referred to as Walsh codes) combined with a pseudo-noise (PN) sequence (or a known code) such that the information bearing signal may be non-coherently demodulated. The PN sequence comprises random 0 and 1 digital signals, wherein the duration for a 0 or 1 to transmit is referred to herein as a PN chip.

The above described timing protocol will now be discussed in reference to FIG. 3, which depicts a time chart 28 illustrating a sequence of transmissions and receptions by base station 14-*i* and mobile-telephone 16-*k.* At time T₁, BS 14-*i* begins transmitting base station signal S₁ to MT 16-*k,* which may be located anywhere in cell 18-*i*. MT 16-*k* begins receiving signal S₁ at time T₁+*d*_{*BS→MT*}, where *d*_{*BS*}_{→}_{*MT*} is a propagation delay from BS 14-*i* to MT 16-*k*. Note that the term propagation delay should be construed to include line-of-sight and non-line-of-sight propagation delays.

MT 16-*k* will wait a time interval *tx* from when MT 16-*k* began receiving signal S₁ before it begins transmitting mobile-telephone signal S₂. Thus, MT 16-*k* will begin transmitting signal S₂ at time T₁+ *d*_{*BS→MT*}+*tx* (or time *d*_{*BS→MT*} after some frame boundary). For example, if *x*=2, then MT 16-*k* transmits signal S₂ at time T₃+ *d*_{*BS*}_{→}_{*MT*} (or two frames after receiving the base station signal S₁).

Due to a propagation delay *d*_{*MT→BS*} from MT 16-*k* to BS 14-*i*, BS 14-*i* will begin receiving signal S₂ at time T₁+*d*_{*BS*}_{→}_{*MT*}+*tx +d*_{*MT→BS*}*.* For ease of discussion, it is assumed that the propagation delay *d*_{*MT→BS*} from MT 16-*k* to BS 14-*i* is the same as the propagation delay *d*_{*BS→MT*}, and both will hereinafter be referred to individually as a one way propagation delay *d*_{ow}, i.e., *d*_{ow} = *d*_{*MT→BS*} *= d*_{*BS→MT*}*,* or collectively as a round trip propagation delay 2*d*_{ow}. Thus, BS 14-*i* will begin receiving signal S₂ at time T₁+*tx*+2*d*_{ow}.

In order to demodulate the received signal S₂, BS 14-*i* must first detect signal S₂. Each radio includes a correlator, which is a device that detects mobile-telephone signals. For example, the correlator detects mobile-telephone signal S₂ by multiplying an incoming signal by the PN sequence, where the PN sequence is time shifted in discrete steps over a period or time interval (referred to herein as a search window W_{*n*}) until the resulting product (of the PN sequence and the incoming signal) exceeds a threshold indicating the detection of mobile-telephone signal S₂. If BS 14-*i* does not begin to receive signal S₂ within the confines of a search window W_{*n*}, BS 14-*i* will not be able to detect signal S₂ (using the timing protocol incorporated in FIG. 2).

To ensure that BS 14-*i* begins receiving signal S₂ within the confines of search windows W_{*n*}, search windows W_{*n*} should span time intervals that include possible arrival times for signal S₂ (traveling a straight line or line-of-sight path between the mobile-telephone and the base station) regardless of the position of mobile-telephone 16-*k* in cell 18-*i*. Based on the above described timing protocol, base station 14-*i* can expect to receive signal S₂ no earlier than the frame boundary and no later than time 2*d*_{ow-radius} after the frame boundary, where *d*_{ow-radius} is the one way propagation delay (or 2*d*_{ow-radius is the round trip propagation delay}) for a signal traveling a distance equal to the radius R_{*i*}. Thus, search windows W_{*n*} should span a duration of at least 2*d*_{ow-radius} beginning at time T_{*n*} and ending no earlier than time T_{*n*}+2*d*_{ow-radius}. In effect, the duration of search windows W_{*n*} restricts the effective radius (or size) of cell 18-*i*, which is also referred to herein as the access range of a base station.

The duration of search windows W_{*n*} depends on the implementation of the correlator. Typically, correlators are implemented in the form of an Application Specific Integrated Circuit (hereinafter referred to as an "ASIC correlator") having a predetermined number of bits (also referred to herein as a "bit limitation") for representing a round trip delay (of a signal traveling from the base station to the mobile-telephone and back to the base station). Such bit limitation limits the duration of the search windows which, as discussed above, limits the effective size of cell 18-*i* or access range of the base station 14-*i*. As long as the bit limitation does not limit search windows W_{*n*} to a duration of less than 2*d*_{ow-radius}, base station 14-*i* should be able to detect signal S₂ transmitted by any mobile-telephone located anywhere within its cell 18-*i* (assuming that R_{*i*} is the same for all points on the circumference).

Typical implementations of base stations in an IS-95 based CDMA wireless communications system include an ASIC correlator having a 12-bit limitation for representing the round trip delay. In order to have fine resolution of delay, a typical value of 1/8 PN chip is used as the minimum resolution unit. The 12-bit limitation (or round trip delay representation) in units of 1/8 PN chips yields a range of 512 PN chips (i.e., 2¹² bits x 1/8 PN chips/bits). For a transmit bandwidth of 1.2288 MHz (which is typical for an IS-95 based CDMA wireless communications system), the 12-bit limitation can represent a round trip delay of 416 µs (i.e., 512 PN chips ÷ 1.2288 PN chips/µs). With air propagation speed of 5.33 µs/mile, the 416 µs round trip delay (or 208 µs one way delay) represents the limitation that if a mobile-telephone is located approximately 39 miles (i.e., 208 µs ÷ 5.33 µs/mile) from the base station, the mobile-telephone is capable of communicating with the base station if the radio path loss is acceptable and the search window is configured correctly - that is, the 12-bit limitation (or 512 time chip delay index representation) allows for a cell with a maximum radius R_{*i*} (or a maximum round trip delay) of approximately 39 miles. A signal transmitted by a mobile-telephone beyond 39 miles of BS 14-*i*, in accordance with the prior art timing protocol, may not arrive at BS 14-*i* within the confines of any search windows W_{*n*} and, thus, will not be reliably detectable with the 12-bit ASIC correlator.

Presently, if the cell size or access range is to be extended beyond the 12-bit limitation of the ASIC correlator (i.e., beyond 39 miles), the ASIC correlator would have to be re-designed. Specifically, the ASIC correlator would have to be re-designed to increase its bit limitation such that signals transmitted by mobile-telephones positioned beyond the access range 12-bit limitation of the ASIC correlator may also be detected. ASIC correlator re-design, however, is undesirable and may not be economical for small scale of applications. Therefore, there exist a need to extend the cell size or access range of the base station without incurring the high costs associated with ASIC correlator re-design.

### SUMMARY OF THE INVENTION

The present invention is a method for performing handoffs in wireless communications systems having extended range concentric cell base station, wherein the concentric cell base station has a micro cell and a macro cell that incorporates multiple timing protocols to extend the base station's access range. In one embodiment, the base station determines whether a handoff is to be performed using absolute path delay information, which will indicate the current and previous positions of a mobile-telephone. If the absolute path delay information indicates that the mobile-telephone is moving between the macro cell and the micro cell, or to a cell associated with another base station, the current base station will instruct the mobile-telephone to perform a handoff to the frequency band associated with the micro cell, macro cell or base station to which the mobile-telephone is traveling towards.

### BRIEF DESCRIPTION OF THE DRAWINGS

The features, aspects, and advantages of the present invention will become better understood with regard to the following description, appended claims, and accompanying drawings where:
FIG. 1 depicts a wireless communications system employing Code Division Multiple Access (CDMA) techniques based on the well-known IS-95 standard;
FIG. 2 depicts a timing schedule used in accordance with one implementation of a timing protocol based on the IS-95 standard;
FIG. 3 depicts a time chart illustrating a sequence of transmissions and receptions by base station and mobile-telephone in accordance with the timing schedule of FIG. 2;
FIG. 4 depicts a base station based on the well-known IS-95 standard for Code Division Multiple Access used in accordance with the present invention;
FIG. 5 depicts a timing schedule for a timing protocol used in accordance with one embodiment of the present invention;
FIG. 6 depicts a time chart illustrating a sequence of transmissions and receptions by a base station and a mobile-telephone located within an extension of a cell;
FIG. 7 depicts a timing schedule for a timing protocol used in accordance with another embodiment of the present invention;
FIG. 8 depicts a base station having a hierarchical cell structure used in accordance with the present invention;
FIG. 9 depicts a timing schedule incorporating a first and a second timing protocol used by the base station of FIG. 8; and
FIG. 10 depicts a base station with a micro cell and a macro cell, wherein the micro and macro cells both have an inner and an outer radius.

### DETAILED DESCRIPTION

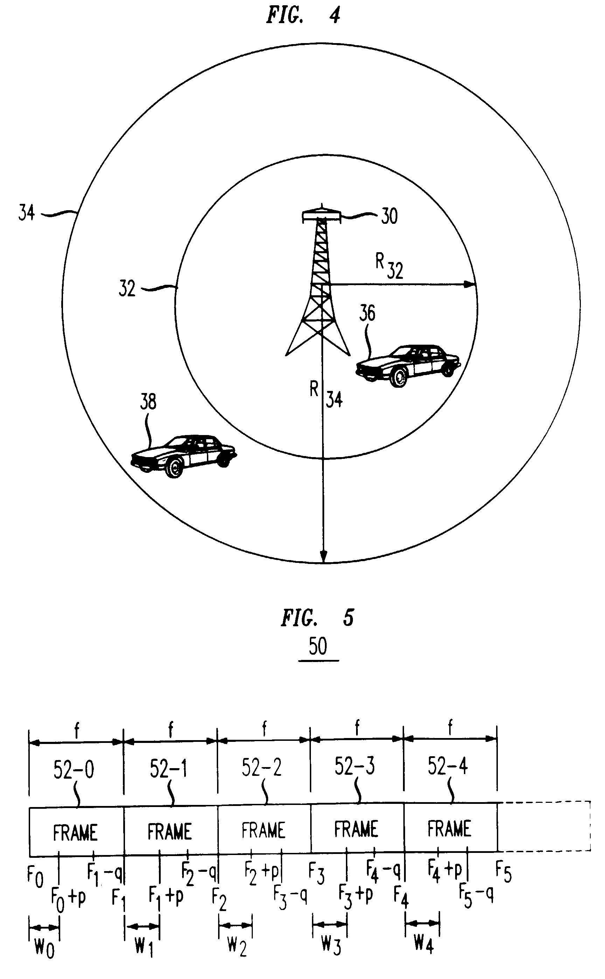

FIG. 4 depicts a base station 30 based on the well-known IS-95 standard for Code Division Multiple Access used in accordance with the present invention. Base station 30 includes radios and antennas for modulating and transmitting base station signals to mobile-telephones and for receiving and demodulating mobile-telephone signals from mobile-telephones within cell 34, and a GPS receiver for receiving timing information using the well-known Global Positioning Satellites. Each radio includes a correlator implemented in the form of an ASIC (hereinafter referred to as an "ASIC correlator") operable to detect mobile-telephone signals such that the mobile-telephone signals may be demodulated.

For purposes of discussion, the ASIC correlator has a 12-bit limitation (or 512 PN chips) for representing a round trip delay (of a signal traveling from base station 30 to a mobile-telephone and back to base station 30), as described in the background section. This should not be construed to limited the present invention to ASIC correlators with 12-bit limitations. It will be clear to one of ordinary skill in the art that the present invention is equally applicable to base stations having ASIC correlators with other bit limitations or correlators implemented in a form other than an ASIC. A 12-bit (or 512 PN chips) ASIC correlator has a search window W_{*n*} of approximately 416 µs in duration. In prior art CDMA wireless communications systems using a timing protocol based on the IS-95 standard, such search window W_{*n*} is configured to begin at time F_{*n*} (marking the beginning of frames) and end at time F_{*n*} + 416 µs, and would allow base station 30 to detect a signal transmitted from mobile-telephones located within approximately 39 miles of base station 30. Thus, a mobile-telephone beyond 39 miles of base station 30 would be considered beyond the access range of base station 30 equipped with a 12-bit ASIC correlator.

Cell 34 has an outer radius Rₒᵤₜₑᵣ (or R₃₄) and an inner radius Rᵢₙₙₑᵣ (or R₃₂), wherein outer radius Rₒᵤₜₑᵣ may be or is a distance beyond the access range of the ASIC correlator bit limitation (e.g., Rₒᵤₜₑᵣ > 39 miles for an ASIC correlator with a 12-bit limitation), inner radius Rᵢₙₙₑᵣ is less than Rₒᵤₜₑᵣ, and the difference ΔR between radii Rₒᵤₜₑᵣ and Rᵢₙₙₑᵣ should be no greater than the distance (or maximum round trip delay) corresponding to the ASIC correlator bit limitation (e.g., ΔR ≤ 39 miles). Thus, part of cell 34 may be beyond the access range of the ASIC correlator bit limitation, in accordance with the subject invention.

The present invention allows base station 30 to detect signals transmitted from mobile-telephones located anywhere in cell 34, including beyond the access range of its ASIC correlator bit limitation (e.g., beyond 39 miles), without ASIC correlator re-design. The present invention is accomplished using a modified timing protocol that will cause search windows and/or base station transmission times to shift with respect to frame boundaries, thereby causing signals transmitted by mobile-telephones positioned beyond the bit limitation of the ASIC correlator to be received within the search windows. This involves transmitting a base station signal at a time *r* relative to frame boundaries and configuring search windows W_{*n*} to begin and end at a time *q* and *q*+*p*, respectively, after the time *r*, wherein *q* is a timing advance value greater than zero for representing a propagation delay corresponding to a signal traveling no more than round trip between the base station and the inner radius of cell 34 (i.e., *q* corresponds to a propagation delay for a distance greater than zero but no more than twice inner radius Rᵢₙₙₑᵣ) and *p* represents a time interval corresponding to the ASIC correlator bit limitation or a time interval over which a mobile-telephone signal may be correlated and thereby detected.

In one embodiment, the present invention uses a modified timing protocol incorporating a timing advance technique. FIG. 5 illustrates a timing schedule 50 for a timing protocol used in accordance with this embodiment of the present invention. The timing schedule 50 includes a series of frames 52-*n*, wherein each frame 52-*n* spans a time interval *f*, and the beginning of each frame 52-*n* is marked by a frame boundary at time F_{*n*} aligned with GPS time using the GPS receiver. In accordance with this modified timing protocol, base station 30 is configured to begin transmitting base station signals at time *q* before the frame boundaries (i.e., at times F_{*n*}*-q*), and search for mobile-telephone signals within search windows W_{*n*} spanning from time F_{*n*} and ending no later than time F_{*n*}+*p*. Likewise, mobile-telephone 38 is configured to begin transmitting signals at some multiple x ofa frame time interval (i.e.,*fx*) after the mobile-telephones began receiving base station signals, where x is some integer greater than or equal to zero.

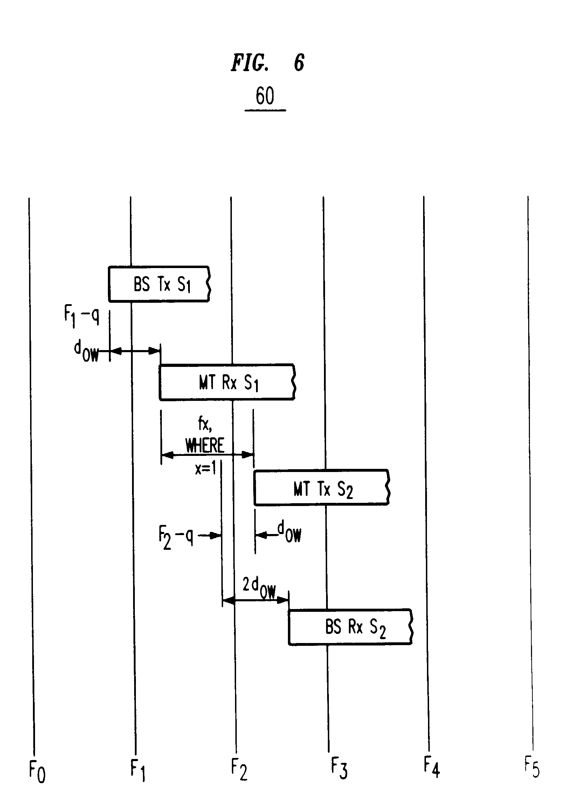

FIG. 6 depicts a time chart 60 illustrating a sequence of transmissions and receptions in accordance with the timing protocol of FIG. 5 by base station 30 and mobile-telephone 38, which may be located anywhere within cell 34. Base station 30 begins transmitting base station signal S₁ at time F₁-*q*. Mobile-telephone 38 begins receiving signal S₁ at time F₁-*q*+*d*_{ow}, where *d*_{ow} is the one way propagation delay from base station 30 to mobile-telephone 38 (or from mobile-telephone 38 to base station 30). Note that for ease of discussion, the propagation delay from base station 30 to mobile-telephone 38 is assumed to be identical to the propagation delay from mobile-telephone 38 to base station 30. If mobile-telephone 38 transmits a mobile-telephone signal S₂ to base station 30, mobile-telephone 38 waits some multiple of a frame time interval (i.e.,*fx*) from when mobile-telephone 38 began receiving signal S₁ before it begins transmitting signal S₂. Thus, mobile-telephone 38 will begin transmitting signal S₂ at some time F₁-*q*+*d*_{ow}+*fx* (or time *d*_{ow}-*q* after some frame boundary). Because of the propagation delay *d*_{ow} from mobile-telephone 38 to base station 30, base station 30 will begin receiving signal S₂ at some time F₁-*q*+*d*_{ow}+*fx*+*d*_{ow} (or F₁-*q*+2*d*_{ow}+*fx*), which positions the signals to be received between time F_{*n*} (i.e., the frame boundary) and time F_{*n*}+*p*, where *p*=416µs corresponding to the ASIC correlator bit limitation (or within the confines of search windows W_{*n*}). Signal S₂ is then detected and processed using techniques well-known in the art. Thus, transmission of signal S₁ at time F_{*n*}-*q* by base station 30 will result in the reception of signals transmitted by mobile-telephones 38 within search windows W_{*n*} such that the mobile-telephone signals may be detected and demodulated by base station 30 notwithstanding that mobile-telephone 38 is beyond the access range of the ASIC correlator bit limitation.

For example, suppose Rᵢₙₙₑᵣ equals 39 miles and Rₒᵤₜₑᵣ equals 78 miles, then ΔR equals 39 miles, which is equal to a distance corresponding to a 12 bit ASIC correlator limitation. In this example, base station 30 would begin transmitting at a time *q*=416 µs (i.e., 2 x 39 miles x 5.33 µs/mile) before a frame boundary such that mobile-telephone signals may be received by base station 30 between time F_{*n*} and F_{*n*}+*p*, where *p*=416µs corresponding to the ASIC correlator bit limitation (or within the confines of search windows W_{*n*}).

In another example, suppose cell 34 has an inner radius Rᵢₙₙₑᵣ of 20 miles and an outer radius Rₒᵤₜₑᵣ of 48 miles. Thus, ΔR is equal to a distance of 28 miles. Since ΔR is less than 39 miles (or the distance corresponding to the limitation of the 12 bit ASIC correlator), the value of *q* may be between 96 µs (2 x (48-39) miles x 5.33 µs/mile) and 213.2 µs (i.e., 2 x 20 miles x 5.33 µs/mile) to ensure or increase the probability that a signal transmitted by any mobile-telephone within cell 34 is received within the confines of search windows W_{*n*} beginning at a frame boundary and ending at a time *p*=416µs after the frame boundary.

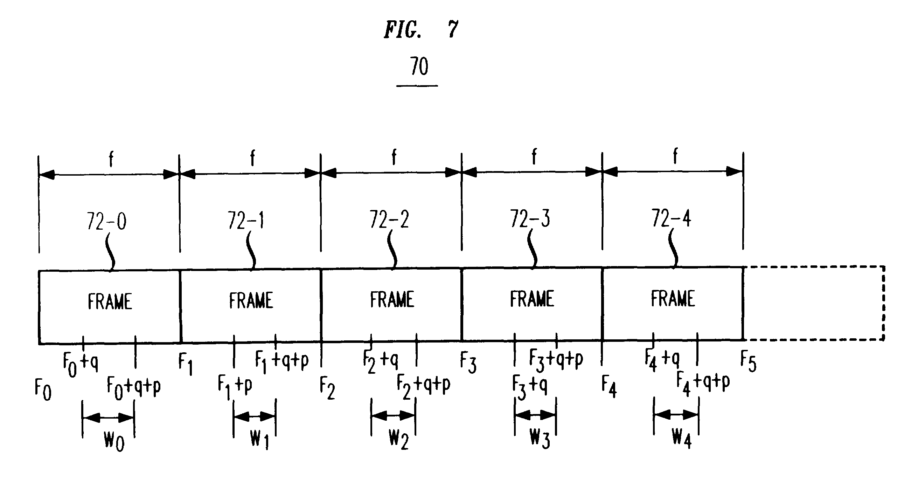

In another embodiment of the present invention, base station 30 is operable to detect signals transmitted from mobile-telephone 38 using a modified timing protocol incorporating shifted or offset search windows W_{*n*}. FIG. 7 illustrates a timing schedule 70 for a timing protocol used in accordance with this embodiment of the present invention. In accordance with the timing schedule 70, base station 30 is configured to begin transmitting signals at the frame boundaries, and search for mobile-telephone signals within shifted search windows W_{*n*} spanning from time F_{*n*}+*q* and ending no later than time F_{*n*}+*q*+*p*. Likewise, mobile-telephone 38 is configured to begin transmitting signals at some multiple *x* of a frame time interval (i.e., *fx*) after the mobile-telephones begin receiving base station signals. Like timing schedule 50, base station 30 using timing schedule 70 will begin to receive signals transmitted from mobile-telephone 38 within the (shifted) search window W_{*n*}.

It should be noted that a base station incorporating only the modified timing protocol of the present invention may not be able to detect mobile-telephone signals transmitted by mobile-telephones located within cell 32. To be capable of detecting such mobile-telephone signals, the present invention uses a timing protocol and a frequency band different from the timing protocol and frequency band being used to communicate with mobile-telephones located within cell 34, as will be described herein.

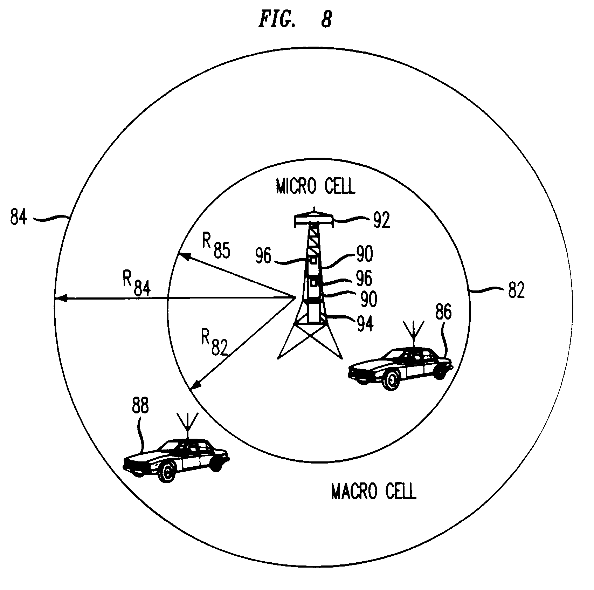

FIG. 8 depicts a base station 80 having a hierarchical cell structure used in accordance with the present invention. Base station 80 has associated a micro cell 82 and a macro cell 84. Micro cell 82 has a micro cell radius R_{micro} or R₈₂, wherein micro cell radius R_{micro} is less than or equal to a distance corresponding to the ASIC correlator bit limitation (e.g., R_{micro} ≤ 39 miles). Macro cell 84 has an outer macro cell radius R_{macro-outer} or R₈₄ and an inner macro cell radius R_{macro-inner} or R₈₆, wherein inner macro cell radius R_{macro-inner} is greater than zero and less than or equal to R_{micro}, and the difference ΔR between the macro cell radii R_{macro-outer} and R_{macro-inner} should be no greater than the distance corresponding to the ASIC correlator bit limitation (e.g., ΔR ≤ 39 miles for a 12 bit ASIC correlator). Although FIG. 8 shows micro cell 82 and macro cell 84 as two distinct cells, it should be understood that micro cell 82 and macro cell 84 may also partially overlap.

Base station 80 comprises a plurality of radios 90, one or more antennas 92 and a GPS receiver 94. Each of the plurality of radios 90 are operable to modulate and demodulate signals using a first frequency band *freq*₁ and/or a second frequency band *freq*₂, wherein the first frequency band *freq*₁ and the second frequency band *freq*₂ are different frequency bands, and frequency bands *freq*₁ and *freq*₂ each include uplink and downlink frequency channels. Each radio 90 includes a correlator 96 implemented in the form of an ASIC. Antennas 92 are operable to transmit and receive signals using the first frequency band *freq*₁ and/or the second frequency band *freq*₂. Base station 80 (or radios 90) is configured to transmit signals using frequency band *freq*₁ such that mobile-telephones located within micro cell 82 receives *freq*₁ pilot signals (i.e., pilot signals being transmitted using frequency band *freq*₁) with an acceptable signal strength and mobile-telephones located without micro cell 82 or within macro cell 84 do not receive *freq*₁ pilot signals with an acceptable signal strength.

Base station 80 provides wireless communications services to mobile-telephones, such as mobile-telephone 86, in micro cell 82 using the first frequency band *freq*₁ and a first timing protocol. The first timing protocol is, in one embodiment, the timing protocol currently being employed in IS-95 based CDMA wireless communications system, as described earlier in the Background section. Base station 80 provides wireless communications services to mobile-telephones, such as mobile-telephone 88, in macro cell 84 using the second frequency band *freq*₂ and a second timing protocol. The second timing protocol can be either of the aforementioned modified timing protocols of the present invention. For purposes of discussion, the present invention will be described herein with reference to the timing protocol depicted in FIG. 5. A timing schedule 100 for the first and second timing protocols is shown in FIG. 9. The timing schedule 100 includes a series of frames 102-*n*, wherein each frame 102-*n* spans a time interval *f*, and the beginning of each frame 102-*n* is marked by a frame boundary at time F_{*n*} aligned with GPS time using the GPS receiver 94. In accordance with the first timing protocol, base station 80 is configured to begin transmitting base station signals using the first frequency band *freq*₁ at the frame boundaries, and search for mobile-telephone signals using the first frequency band *freq*₁ within first search windows W₁₋_{*n*} spanning from time F_{*n*} and ending no later than time F_{*n*}+*p*_{1,} wherein *p*₁ represents a time interval corresponding to a bit limitation for the first search windows or a correlator associated with the first search windows. By contrast, in accordance with the second timing protocol, base station 80 is configured to begin transmitting base station signals using the second frequency band *freq*₂ at time *q* before the frame boundaries, wherein the timing advance value *q* in this instance represent a propagation delay corresponding to a signal traveling no more than round trip from the base station and a distance R_{macro-inner}. Base station 80 would search for mobile-telephone signals using the second frequency band *freq*₂ within second search windows W₂₋_{*n*} spanning from time F_{*n*} and ending no later than time F_{*n*}+*p*₂, wherein *p*₂ represents a time interval corresponding to a bit limitation for the second search windows or a correlator associated with the second search windows.

It should be understood that base station 80 may use correlators with the same or different bit limitations for representing the round trip delay of a signal traveling to and from base station 80. For example, base station 80 may use a g-bit ASIC correlator in association with the first timing protocol, and a *h*-bit ASIC correlator in association with the second timing protocol, wherein *g* and *h* are non-zero positive integer values. In such a case, the search window for the *g*-bit ASIC correlator may span a duration *p*₁, whereas the search window for the *h*-bit ASIC correlator may span a duration *p*₂. It will be assumed, however, for ease of discussion that the ASIC correlators being used for the first and second search windows W₁₋_{*n*}, W₂₋_{*n*} (depicted in FIG. 9) have the same bit limitations.

Mobile-telephones 86, 88 are configured to begin transmitting signals at some multiple *x* of a frame time interval (i.e.,*fx*) after the mobile-telephones began receiving base station signals, where *x* is some integer greater or equal to zero. Whether mobile-telephones 86, 88 use the first or second frequency band *freq*₁, *freq*₂ to transmit signals depend on whether mobile-telephones 86,88 are located. For example, since mobile-telephone 86 is depicted as being located in cell 82, mobile-telephone 86 will use frequency band *freq*₁ to transmit its signals. This would allow base station 80 to receive, within the confines of search windows W_{*n*}, signals transmitted by mobile-telephone 86 using frequency band *freq*₁.

To facilitate access operations with base station 80 (e.g., system access), mobile-telephones 86, 88 should be configured to first search for a *freq*₁ pilot signal. If mobile-telephones 86, 88 detect a *freq*₁ pilot signal with an acceptable signal strength (i.e., pilot signal strength = Rx pilot power/total Rx power ≥ over some threshold level, such as -14dB), then mobile-telephones 86, 88 will use frequency band *freq*₁ to communicate with base station 80 (or transmit its signals to base station 80). Otherwise mobile-telephones 86, 88 will search for a *freq*₂ pilot signal (i.e., a pilot signal being transmitted using frequency band *freq*₂), and upon detecting such pilot signal, mobile-telephones 86, 88 will use frequency band *freq*₂ to communicate with base station 80 (or transmit its signals to base station 80). This configuration will cause mobile-telephones 86, 88 to use frequency band *freq*₁, not frequency band *freq*₂, when they are located in micro cell 82. Likewise, this configuration will cause mobile-telephones 86, 88 to use frequency band *freq*₂, not frequency band *freq*₁, when they are located in macro cell 84.

As mobile-telephones 86, 88 move between micro cell 82 and macro cell 84, or to a cell associated with another base station, handoffs are performed to maintain communication between mobile-telephones 86, 88 and a base station (e.g., keep calls active). The manner in which the present invention performs handoffs varies according to the location of the mobile-telephone.

When a mobile-telephone is in micro cell 82, the mobile-telephone is communicating with base station 80 using the first frequency band *freq*₁. In order to determine whether to perform a handoff, the mobile-telephone measures the pilot E_{c}/Iₒ (i.e., pilot power to total power ratio) of a serving base station (i.e., base station in communication with mobile-telephone) for frequency band *freq*₁ and signals strengths for *freq*₁ pilot signals transmitted by other base stations. The measurements are transmitted to base station 80. If the pilot E_{c}/Iₒ of the serving base station for the first frequency band *freq*₁ is lower than a first threshold value and if there are no *freq*₁ pilot signals transmitted by other base stations above a second threshold value, base station 80 instructs (via a message) the mobile-telephone to perform an inter-frequency handoff from the first frequency band *freq*₁ to the second frequency band *freq*₂. The manner in which the inter-frequency handoff is performed may or may not incorporate mobile assisted handoff (MAHO) techniques, which is well-known in the art. If the pilot E_{c}/Iₒ of the serving base station for the first frequency band *freq*₁ is lower than the first threshold value but there are *freq*₁ pilot signals transmitted by other base stations above the second threshold value, base station 80 instructs (via a message) the mobile-telephone to perform an intra-frequency or soft handoff to a candidate base station, which is a base station associated with the *freq*₁ pilot signal above the second threshold. The manner in which base stations perform intra-frequency and soft handoffs is well-known in the art.

When a mobile-telephone is in macro cell 84, the mobile-telephone is communicating with base station 80 using the second frequency band *freq*₂. In order to determine whether to perform a handoff, the mobile-telephone periodically measures *freq*₁ pilot signals. The measurements are transmitted to base station 80. If the signal strength of the *freq*₁ pilot signals are above a third threshold value, base station 80 instructs (via a message) the mobile-telephone to perform an inter-frequency handoff from the second frequency band *freq*₂ to the first frequency band *freq*₁. The inter-frequency handoff may be between the macro cell and micro cell of a same base station, or between the macro cell of one base station and a cell (or micro cell) of another base station. Note that the first, second and/or third threshold values may be identical or different values.

If a mobile-telephone in macro cell 84 (or in micro cell 82) is incapable of performing inter-frequency measurements, base station 80 can instruct (via a message) the mobile-telephone when to perform an inter-frequency handoff by using absolute path delay information, wherein the absolute path delay information indicates how far the mobile-telephone is from base station 80. In one embodiment, base station 80 detects mobile-telephone signals and determines time-of-arrivals for the detected mobile-telephone signals. Such time-of-arrivals are used to determine absolute path delay information, which is then used to determine whether a mobile-telephone is moving inward from macro cell 84 to micro cell 82, or vice-versa. If base station 80 determines the mobile-telephone is moving inward or in micro cell 82 (or vice-versa), base station 80 instructs (via a message) the mobile-telephone to perform an inter-frequency handoff from the second frequency band *freq*₂ to the first frequency band *freq*₁ (or vice-versa)

For example, suppose base station 80 and mobile-telephone 88 are communicating using the second timing protocol (as described for FIG. 9) - that is, base station 80 is configured to begin transmitting base station signals using the second frequency band *freq*₂ at time *q* before the frame boundaries, and search for mobile-telephone signals using the second frequency band *freq*₂ within search windows W_{*n*} spanning from time F_{*n*} and ending no later than time F_{*n*}+*p*. Base station 80 detects a signal on the second frequency band *freq*₂ from mobile-telephone 88 at 470 µs after F_{*n*}-*q*. Thus, the absolute (round trip) path delay is 470 µs and mobile-telephone 88 is approximately 44.09 miles (i.e., 470 µs ÷ 5.33 µs/mile ÷ 2) from base station 80. Base station 80 detects a next or subsequent signal on the second frequency band *freq*₂ from mobile-telephone 88 at 440 µs after F_{*n*}-*q*. Thus, the absolute (round trip) path delay is 440 µs and mobile-telephone 88 is approximately 41.28 miles (i.e., 440 µs ÷ 5.33 µs/mile + 2) from base station 80. Based on the absolute (round trip) path delay information, base station 80 could determine that mobile-telephone 88 is moving inward from macro cell 84 to micro cell 82 and could instruct (via a message) mobile-telephone 88 to perform an inter-frequency handoff from the second frequency band *freq*₂ to the first frequency band *freq*₁.

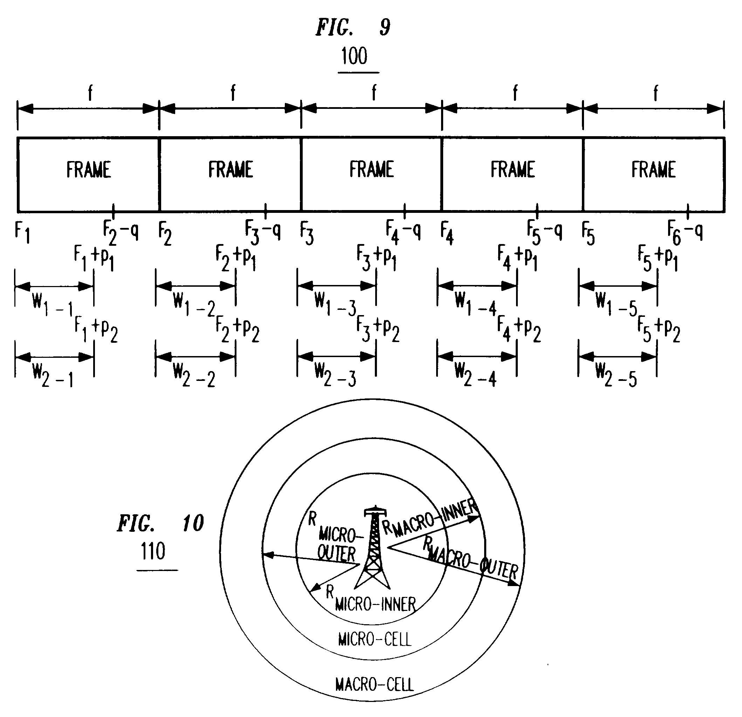

Although the present invention has been described in considerable detail with reference to certain embodiments, other versions are possible. For example, the present invention is also applicable to base stations with a micro cell and a macro cell having inner and outer radii, see FIG. 10, and wireless communication systems employing other types of multiple access techniques, such as time division multiple access. Therefore, the spirit and scope of the present invention should not be limited to the description of the embodiments

## Claims

1. A method for performing a handoff in a wireless communications system having at least one extended range concentric cell base station, the base station having associated a micro cell and a macro cell, the method comprising the steps of:
receiving signals from a mobile-telephone;
determining a direction in which the mobile-telephone is traveling using the received signals;
transmitting a first message instructing the mobile-telephone to perform a handoff from a first frequency band associated with the micro cell to a second frequency band associated with the macro cell if the mobile-telephone is traveling outward from the micro cell to the macro cell and the mobile-telephone is within the macro cell; and
transmitting a second message instructing the mobile-telephone to perform a handoff from the second frequency band to the first frequency band if the mobile-telephone is traveling inward from the macro cell to the micro cell and the mobile-telephone is within the micro cell.

2. The method of claim 1, wherein the step of determining the direction comprises the steps of:
determining absolute path delay information for the received signals.

3. The method of claim 2, wherein the direction in which the mobile-telephone is traveling is determined using the absolute path delay information of at least two received signals.

4. The method of claim 3, wherein the mobile-telephone is determined to be traveling from the macro cell to the micro cell when a first absolute path delay for a first received signal is greater than a second absolute path delay for a second received signal, the second received signal being a subsequent transmitted mobile-telephone signal.

5. The method of claim 3, wherein the mobile-telephone is determined to be traveling from the micro cell to the macro cell when a first absolute path delay for a first received signal is less than a second absolute path delay for a second received signal, the second received signal being a subsequent transmitted mobile-telephone signal.

6. A method for performing a handoff in a wireless communications system having at least one extended range concentric cell base station, the concentric cell base station being a serving base station and having associated a micro cell and a macro cell, the method comprising the steps of:
receiving a pilot E_{c}/Iₒ measurement of the concentric cell base station for a first frequency band from a mobile-telephone, wherein the first frequency band is associated with the micro cell;
receiving pilot signal strength measurements from the mobile-telephone for pilot signals being transmitted on the first frequency band; and
transmitting a message to the mobile-telephone instructing the mobile-telephone to handoff to a second frequency band if the received pilot E_{c}/Iₒ measurement is below a first threshold value and if the received pilot signal strength measurements are below a second threshold, wherein the second frequency band is associated with the macro cell.

7. The method of claim 6 comprising the additional step of:
transmitting a message to the mobile-telephone instructing the mobile-telephone to perform a handoff to a candidate base station, the candidate base station being a base station using the first frequency band and associated with a received pilot signal strength measurement above a second threshold

8. A method for performing a handoff by a mobile-telephone in a wireless communications system having at least one extended range concentric cell base station, the base station having a micro cell associated with a first frequency band and a macro cell associated with a second frequency band, the method comprising the steps of:
receiving pilot signal strength measurements for first frequency band pilot signals from a mobile-telephone in communication with the base station using the second frequency band; and
transmitting a message to the mobile-telephone instructing the mobile-telephone to perform a handoff to the first frequency band if the pilot signal strength measurements indicates a pilot signal strength over a threshold.
